# EUROPEAN PATENT SPECIFICATION

(11) **EP 3 337 179 B1**
(45) Date of publication and mention of the grant of the patent: **28.10.2020**
(21) Application number: 16306681.4
(22) Date of filing: 14.12.2016
(51) Int. Cl.: H04Q 11/00

(54) **AN OPTICAL NODE AND ASSOCIATED METHOD FOR INSERTING OPTICAL PACKETS IN AN OPTICAL NETWORK**
OPTISCHER KNOTEN UND ZUGEHÖRIGES VERFAHREN ZUR EINBRINGUNG VON OPTISCHEN PAKETEN IN EIN OPTISCHES NETZWERK
NOEUD OPTIQUE ET PROCÉDÉ ASSOCIÉ PERMETTANT D'INSÉRER DES PAQUETS OPTIQUES DANS UN RÉSEAU OPTIQUE

(43) Date of publication of application: 20.06.2018
(73) Proprietor: Alcatel Lucent, 91620 Nozay (FR)
(72) Inventor: USCUMLIC, Bogdan, 91620 NOZAY (FR)
(74) Representative: Novagraaf Technologies

(56) References cited:
- EP-A1- 2 071 770
- EP-A1- 2 942 973
- US-A1- 2003 099 243
- US-A1- 2007 116 027

## Description

### FIELD OF THE INVENTION

The present invention relates to optical communication network.

### BACKGROUND OF THE INVENTION

The field of communication technologies evolves rapidly to match the ever-increasing demands of content to be delivered. In order to ensure a proper end user experience, the communication networks have to convey content without much degradation and with a given latency.

Considering specific technics to convey data, it may happen in a communication network that the resources, either physical or logical, are not sufficient to convey all the content. The capacity of a communication network cannot be increased indefinitely because of various and different constraints, such as limitations of the physical layer or prohibitive cost to upgrade said communication network, or interoperability with other communication networks.

In terms of resources use, for example in an optical communication, the management of available wavelengths is a key aspect. When continuous data transmissions have to be handled, it can be advantageous to allocate some wavelengths dedicated to this continuous transmission over a long period of time. This allocation scheme is not efficient in case of bursty transmission. In order to address these difficulties, optical packet switching (OPS) or optical burst switching (OBS) technics have emerged.

In OPS or OBS networks, resources are considered to be shared on the wavelengths dimension and on the time dimension. Data to be conveyed are encapsulated or segmented into packets, which are allocated on different wavelengths for a given a time duration or time slot. It is an efficient scheme to optimize the use of wavelengths over time. However, wavelengths allocation become more complex for preventing collision of packets carried on the same wavelengths on the same time slot. Signaling and protection mechanisms may be used to block or reserve the used wavelengths on given time slots. In some cases, it can lead to a non-optimum use of the optical resources as the avoiding of collision reduces the insertion opportunities of data packets in a multiple destination optical network.

Prior art document US2003/099243 discloses such OBS network with an ingress node containing a packet aggregator which classifies and provides packets to separate queues in function of priority and destination.

It is then needed to have a solution that complies with the various constraints inherent to a communication network.

### SUMMARY OF THE INVENTION

The invention aims to remedy all or some of the disadvantages of the above identified prior art. It particularly proposes ways for transmitting optical packets in an optical network.

A first aspect of the invention relates then to a method for transmitting optical packets by an optical node in an optical network, said optical network being an optical packet switching network, said optical node comprising a first optical transmitter and a first optical packet insertion layer cooperating with said first optical transmitter and comprising a first aggregation stage, a first traffic shaper and a destination queuing stage, the method comprising the following steps:
- aggregating of a first data packet to be transmitted on the optical network with other data packets to be transmitted on said optical network, said step of aggregating being performed by the first aggregation stage and resulting into a first aggregated packet comprising the first data packet,
- processing of the first aggregated packet by the first traffic shaper, said first aggregated packet being provided by the first aggregation stage to the first traffic shaper, said step of processing by the first traffic shaper limiting the number of packets processed by the first destination queuing stage below a threshold, said threshold being determined from an optical transmitting capacity from the optical node,
- queuing of the first aggregated packet by the first destination queuing stage, said first aggregated packet being provided by the first traffic shaper to the first destination queuing stage, said first destination queuing stage processing the first aggregated packet according to a first destination criteria,
- providing the first aggregated packet by the first destination queuing stage to the first optical transmitter,
- transmitting a first optical packet by the first optical transmitter on the optical network, said first optical packet comprising the first aggregated packet.

A second aspect of the invention relates then to an optical node in an optical network being an optical packet switching network, said optical node comprising:
- a first optical transmitter for transmitting optical packets on the optical network,
- a first optical packet insertion layer cooperating with said first optical transmitter,
said first optical packet insertion layer comprising:
- a first aggregation stage for aggregating a first data packet to be transmitted on the optical network with other data packets to be transmitted on said optical network, and for outputting a first aggregated packet comprising the first data packet,
- a first traffic shaper for processing the first aggregated packet being provided by the first aggregation stage, said first traffic shaper limiting the number of packets processed by a first destination queuing stage below a threshold, said threshold being determined from the optical transmitting capacity from the optical node,
- a first destination queuing stage for queuing the first aggregated packet being provided by the first traffic shaper, said first destination queuing stage processing the first aggregated packet according to a first destination criteria and then providing the first aggregated packet to the first optical transmitter.

Thus, thanks to these features, the method allows the optical node to insert data packets on the optical ring network after an aggregating step, a traffic shaping step and a destination queuing step. The aggregation of data packets allows to build aggregated data packets which can optimize the resources of optical switching network. The traffic shaping step allows to limit the number of aggregated packets, which is advantageous to avoid overload during the destination queuing step. The destination queuing step enables the first transmitter to transmit the aggregated packet at the time when optical resources are available. The cooperation between the aggregation stage, the traffic shaper and the destination queuing stage is advantageous to insert in data packets on the optical network by ensuring the stability of the operations of said optical network OR, optimizing the use of optical resources.

According to various embodiments, the method and/or the optical node comprises one or more of the features below, which should be considered in any possible technical combinations:
- the method comprises an additional step of criteria queuing of the first aggregated packet by a criteria queuing stage comprised in the first optical packet insertion layer, said criteria queuing stage processing the first aggregated packet according to a first queuing criteria,
- the first queuing criteria is selected from the group consisting of a quality of service criteria, a class of service criteria, and a first-in first-out criteria,
- the first destination criteria is determined to minimize the duration of the processing of the first data packet by the first optical insertion layer, and according to a target destination from the first aggregated packet,
- the optical node further comprises a second optical transmitter and a second optical packet insertion layer cooperating with said second optical transmitter and comprising a second aggregation stage, a second traffic shaper and a second destination queuing stage, said method further comprising the following steps:
   ∘ aggregating of a second data packet to be transmitted on the optical network with other data packets to be transmitted on said optical network, said step of aggregating being performed by the second aggregation stage and resulting into a second aggregated packet comprising the second data packet,
   ∘ processing of the second aggregated packet by the second traffic shaper, said second aggregated packet being provided by the second aggregation stage to the second traffic shaper, said step of processing by the second traffic shaper limiting the number of packets processed by the second destination queuing stage below another threshold, said other threshold being determine from the optical transmitting capacity from the optical node,
   ∘ queuing of the second aggregated packet by the second destination queuing stage, said second aggregated packet being provided by the second traffic shaper to the second destination queuing stage, said second destination queuing stage processing the second aggregated packet according to a second destination criteria,
   ∘ providing the second aggregated packet by the second destination queuing stage to the second optical transmitter,
   ∘ transmitting a second optical packet by the second optical transmitter on the optical network, said second optical packet comprising the second aggregated packet,
- the step of transmitting the first optical packet by the first optical transmitter is performed and then the step of transmitting the second optical packet by the second optical transmitter is performed,
- the second destination criteria is determined to minimize the duration of the processing of the second data packet by the second optical insertion layer, and according to a target destination from the second aggregated packet.

### BRIEF DESCRIPTION OF THE FIGURES

Some embodiments of the present invention are now described, by way of example only, and with reference to the accompanying drawings, in which:
- FIG. 1 is a schematic block diagram of an optical network according to an embodiment of the invention,
- FIG. 2 is a schematic block diagram of an optical node according to an embodiment of the invention,
- FIG. 3 is a schematic block diagram of an optical insertion layer from an optical node according to an embodiment of the invention,
- FIG. 4 is a schematic diagram of transmitting paths of another optical node according to an embodiment of the invention,
- FIG. 5 is another schematic diagram of optical insertion layers from an optical node according to an embodiment of the invention,
- FIG. 6 is a schematic block diagram of an optical node according to an embodiment of the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, the elements designated with arrows are depicting either optical signals carried on waveguides or electrical signals carried on wired connections. The orientations of the arrows symbolize the propagation direction of the optical and/or electrical signals. Such schematic representations are non-limiting and serve only for the understanding of the invention.

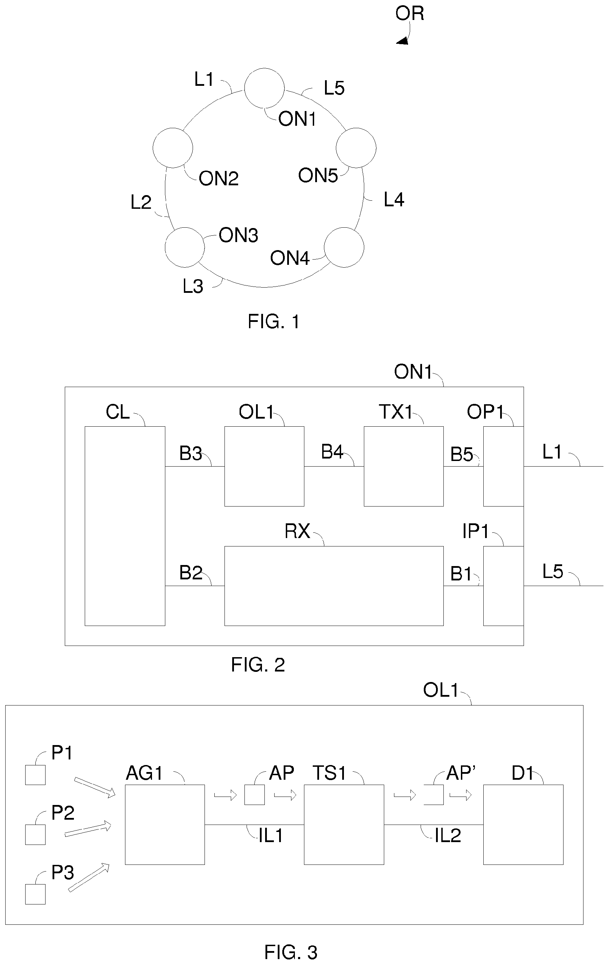

Referring to figure **FIG. 1**, a schematic block diagram of an optical network according to an embodiment of the invention is depicted.

In an embodiment an optical network is depicted as a schematized and simplified representation. It is depicted hereinafter as the optical ring network OR from figure FIG. 1, but it is not limited to such topology of optical network. The optical network may be for example a partial ring. In the latter, the optical ring network OR is as an optical bus network with optical links and optical nodes adapted to manage bidirectional propagation of optical links.

In an example the optical ring network OR is implemented in a datacenter (not depicted) and interconnects the servers, the storage units and the control centers of the datacenter and interconnects also the datacenter with other datacenters.

In another example the optical ring network OR is implemented in a metropolitan area network and interconnects its network elements together and interconnects said metropolitan network to other networks.

The optical ring network OR comprises:
- a first optical node ON1, and a second optical node ON2, interconnected through a first optical link L1,
- a third optical node ON3, interconnected with the second optical node ON2 through a second optical link L2,
- a fourth optical node ON4, interconnected with the third optical node ON3 through a third optical link L3,
- a fifth optical node ON5, interconnected with the fourth optical node ON4 through a fourth optical link L4, and interconnected with the first optical node ON1 through a fifth optical link L5.

The first optical link L1, the second optical link L2, the third optical link L3, the fourth optical link L4 and the fifth optical link L5 are optical waveguides adapted to convey optical signals. In an example the first optical link L1 is able to transport informative data as well as signaling and control data. In examples such optical links are optical waveguides such as optical fibers. In an example the optical fibers used for the mentioned optical links are all the same kind of fibers, but in another example, the optical fibers can be different from a segment from the optical ring network OR to another segment. In another example the optical links are multi carrier wavelengths optical fibers enabled to convey simultaneously multiple optical signals, each being carried over a dedicated carrier wavelength.

In an embodiment, an optical link such as the first optical link L1 or the fifth optical link L5 is a logical entity aggregating several multi carrier wavelengths optical fibers. In a non-limiting example, the fifth optical link L5 comprises two optical waveguides, each being enabled to convey optical signals on multiple carrier wavelengths. In yet another non-limiting example one of the two optical waveguides comprised in the optical link L5 belongs to the optical ring network OR and also to another optical ring network (not depicted in the figure FIG. 1).

In an example, in a metropolitan area network, the distance of the optical links between the neighboring optical nodes is 40 km which is covered in a duration of 0.2 millisecond with optical signals.

The first optical node ON1, the second optical node ON2, the third optical node ON3, the fourth optical node ON4 are optical nodes along the optical ring network OR and are adapted to insert and receive optical signals on said optical ring network OR. In examples such optical nodes are usually placed nearby or integrated in the network elements of the datacenter, or of the segments of the metropolitan network, for allowing them to send and receive chunks of data, that are conveyed through optical signals across the optical ring network OR.

Referring to figure **FIG. 2****,** a schematic block diagram of an optical node according to an embodiment of the invention is depicted.

Details on the first optical node ON1 are provided.

In an embodiment, the first optical node ON1 is adapted to transmit optical signals to be conveyed on the first optical link L1 and/or on the fifth optical link L5. The first optical node ON1 is also adapted to receive incoming optical signals carried over the first optical link L1 and/or the fifth optical link L5. The first optical node ON1 can be either an endpoint for optical signals addressed to said first optical node ON1, or a start point for optical signals addressed to other optical nodes from the optical ring network OR.

In other cases, the first optical node ON1 is also an optical node to be crossed transparently or almost transparently by optical signals that are generated by others optical nodes and addressed to yet others optical nodes. For example, the fifth optical node ON5 transmits an optical signal directed to the second optical node ON2. Such optical signal is conveyed through the fifth optical link L5, passes across the first optical node ON1 and propagates further on the first optical link L1 up to the second optical node ON2. In an example, signaling and control signals are conveyed to the first optical node ON1 to indicate that the optical signal is not intended to be processed by said first optical node ON1 and that it should be let pass through. For letting optical signals pass through, the first optical node ON1 may comprise an internal bypass mechanism that interconnects the fifth optical link L5 to the first optical link L1.

In an embodiment, when the first optical node ON1 is the termination point of an incoming optical signal, said first optical node ON1 may comprise a signal blocker for blocking partially or fully incoming optical signals. In an example the signal blocker BK is a wavelength blocker enabled to selectively block some carrier wavelengths and let pass through (cooperating then with the internal bypass mechanism) the other carrier wavelengths that are propagating through the first or fifth optical links. In another example, the signal blocker is a slot blocker and is enabled to partially or fully block a given optical slot during which optical packets are carried by different carrier wavelengths.

The first optical node comprises a transmitting chain and a receiving chain for managing outgoing/incoming optical signals. In the example of figure FIG. 2, an input optical port IP1 belonging to the receiving chain is connected to the fifth optical link L5 for receiving optical signals that are conveyed on the optical ring network OR. In said figure FIG. 1, an output optical port OP1, which belongs to the transmitting chain is connected to the first optical link L1 for transmitting or inserting optical signals on the optical ring network OR. Such arrangement of the fifth optical link L5 for receiving optical signals whereas the first optical link L1 is for transmitting optical signals is a non-limiting example, and an alternative arrangement wherein the input optical port IP1 and the output optical port OP1 are both connected respectively to the first optical link L1 and the fifth optical link L5 is possible also.

The receiving chain comprises the input optical port IP1, which is connected with an optical receiver RX through an internal optical connection B1.

The optical receiver RX is adapted to process incoming optical signals received on the input optical port IP1, in order to extract the useful data that were transported up to the first optical node ON1. In an example the optical receiver RX may comprise an Optical to electrical (O/E) conversion module and a Digital Signal Processing (DSP) module for processing the converted optical signal into the electrical domain. For example the DSP module may perform the following tasks:
- chromatic dispersion compensation function,
- polarization demultiplexing and equalization functions,
- carrier frequency estimation function,
- carrier phase estimation function,
- samples decision function,
- samples demapper and Forward Error Correction functions.

In an example, the DSP module is a digital signal processor adapted to perform signal processing operations. In another example the DSP module is the combination of a General Purpose Processor (GPP) with a dedicated computing unit such as a Field Programmable Gate Array (FPGA).

The DSP module is further connected to a client layer CL through an internal electrical link B2. The client layer CL is provided with extracted data from the optical signals by the optical receiver RX, and is in charge to further forward said extracted data to the recipient or to other intermediate nodes from a communication network inter-connected with the optical ring network OR.

In an embodiment, the transmitting chain comprises:
- a first optical insertion layer OL1 connected to the client layer CL through an internal electrical link B3. The client layer CL may be the different than the one associated to the receiving chain, but it can be also the same device. Details of the optical insertion layer OL1 are provided hereinafter,
- a first optical transmitter TX1, connected to the first optical insertion layer OL1 through an internal electrical link B4,
- the first optical output port OP1 connected to the first optical transmitter TX1 through an internal optical link B5.

In an embodiment, the first optical insertion layer OL1 is provided with data packets from the client layer CL through the internal electrical link B3, said data packets being intended to transit on the optical ring network OR. These data packets may have one of the optical nodes from the optical ring network OR as endpoints, or will be further be dispatched to other communication network through optical nodes being then intermediate transit points.

The data packets are processed by the optical insertion layer OL1 which is in charge of scheduling the insertion of said data packets onto the optical ring network OR. As will be seen later on, various processing stages are performed in the optical insertion layer OL1 in order to ensure an optimal use of the optical resources from the optical ring network OR.

The optical insertion layer OL1 further provides processed data packets to the first optical transmitter TX1 through the internal electrical link B4. Said data packets are further processed by said first optical transmitter TX1 for generating a first optical signal which is passed to the first optical output port OP1 through the internal optical link B5. The first optical output port OP1 transmits then optical packets through the first optical signal on the optical ring network OR.

The first optical transmitter TX1 may generate coherent optical signals which will be received by coherent optical receivers at the destination optical node.

Alternatively, the first optical transmitter TX1 may generate non-coherent optical signals to be transmitted and then received by non-coherent optical receivers at the destination optical node.

The first optical transmitter TX1 converts the received data packets with an electrical to optical conversion into optical data packets. Further signal processing is also applied in order to appropriately shape the optical data packets into the first optical signal.

In an embodiment, the first optical transmitter TX1 is a fast-tunable optical transmitter. A fast-tunable transmitter is enabled to tune of a carrier wavelength in a shorter time than the duration of an optical time slot. Advantageously the first optical transmitter TX1 is able to switch from a carrier wavelength to another for each time slot, making it possible to send optical packets to a different destination optical node at each time slot.

Referring to figure FIG. 3, a schematic block diagram of an optical insertion layer from an optical node according to an embodiment of the invention is detailed.

In an embodiment, the first optical insertion layer OL1 comprises:
- a first aggregation stage AG1,
- a first traffic shaper TS1,
- a first destination queuing stage D1,
- an internal link IL1 linking the first aggregation stage AG1 with the first traffic shaper TS1 for exchanging data,
- an internal link IL2 linking the first traffic shaper TS1 with the first destination queuing stage D1 for exchanging data.

The first aggregation stage AG1, the first traffic shaper TS1 and the first destination queuing stage D1 are devices or modules that cooperate in the processing of the data packets received by the first optical insertion layer OL1 in order to insert packets onto the optical ring network OR in an efficient manner.

At a given instant or time slot in the optical ring network OR and in the first optical node ON1, the first optical insertion layer OL1 receives from the client layer CL a first data packet P1, a second data packet P2 and a third data packet P3. Only three data packets are depicted in order to simplify the representation of the processing achieved by the optical insertion layer OL1, but it can be less than three but also much more. The number of data packets to be processed simultaneously on the present time slot depends indeed of the traffic volume to be managed and transmitted by the first optical node ON1.

The first data packet P1, the second data packet P2 and the third data packet P3 are provided to the first aggregation stage AG1. Said first aggregation stage AG1 is responsible for queuing the received data packets and to aggregate them into a single packet. The purpose of the aggregation of data packets is to make an efficient use of the available space or capacity within an optical slot, taking into account the appropriate latency. In an example, if the data packets are not aggregated, an optical slot may carry only a single data packet, whereas the next optical slot is filled to its entire capacity of three data packets, whereas a fourth data packet cannot fit into this next optical slot. On another example, waiting that sufficient data packets are present to fill an optical slot may be problematic with regards to latency for delivering said data packets. These two examples show that a tradeoff between capacity and latency is to be made.

The first aggregation stage AG1 aggregates the first data packet P1, the second data packet P2 and the third data packet P3 into an aggregated data packet AP.

The first aggregated packet AP is provided by the first aggregation stage AG1 to the first traffic shaper TS1 through the first internal link IL1.

The first traffic shaper TS1 processes then the aggregated data packet. The first traffic shaper TS1 is an entity enabled to control and limit the rate of the aggregated date packets that it outputs. The first traffic shaper TS1 guarantees that the next processing stage of the first optical insertion layer OL1, and thus the first optical transmitter TX1, is not overloaded with numerous aggregated data packets. Indeed, the first aggregation stage AG1 ensures that optical slot are filled in an optimum manner, but due to the constraint on available wavelength to carry packets to be inserted on the optical ring network OR, it may happen that the first optical transmitter TX1 cannot transmit at each time slot. The first traffic shaper TS1 contributes to the stability of the optical ring network by ensuring a controlled overload and a controlled jitter in the insertion process of packets.

In an example the first traffic shaper TS1 uses a traffic shaping mechanism such as token bucket or leaky bucket. These traffic shaping mechanisms are able to control the arrival rate of the packets entering into the output stages of the first optical node ON1. The bucket (token or leaky) will allow the optical packet to pass only if the total capacity of the bucket is not over-loaded. Otherwise, the packet will be rejected in order to ensure the network stability in terms of overload, jittering, and packet loss. The first traffic shaper TS1 allowable rate is preconfigured for the first optical transmitter TX1, and depends on the total transit traffic on the wavelengths. The first traffic shaper TS1 may also be configured on the fly depending on the load of the optical ring network OR. Such configuration of the first traffic shaper TS1 may be handled by network control/supervisor or by management/control plane distributed amongst the optical nodes from the optical ring network OR.

In an embodiment, the adjustment of the operation of the first traffic shaper TS1, the traffic shaping mechanism has the information exchange with the entity controlling the first optical node ON1. If the client layer CL is sending too much traffic, which will cause the unstable operation of the optical ring network OR, this will be discovered by the traffic shaping mechanism, which will inform the first optical node ON1's control entity about the issue. Next, the control entity informs the client layer CL that it should limit the amount of traffic that it sends, in order to remove the cause of the network congestion.

In an embodiment the first traffic shaper TS1 limits the number of packets to be outputted to the next processing stage - namely the first destination queuing stage - below a threshold. Said threshold is determined from an optical transmitting capacity from the first optical node ON1. The transmitting capacity of said optical node ON1 depends on various factor such as the number of wavelengths on which an optical transmitter of the first optical node ON1 may tune on, and the overall usage of the resources from the optical ring network OR. The threshold may then be adjusted on a regular basis to reflect the remaining transport capacity of the optical ring network OR.

The first traffic shaper TS1 processes the aggregated packets and then provides them, once it has ensured stability of the optical ring network OR is guaranteed, to the first destination queuing stage D1, through the second internal link IL2. In figure FIG. 3, the provided aggregated packet to the first destination queuing stage D1 is the first aggregated packet AP', that corresponds to the first aggregated packet AP after processing by the first traffic shaper TS1.

The first destination queuing stage D1 receives the first aggregated packet AP' and then processes it according to a first destination criteria. The destination or target optical node of the first aggregated packet AP' is analyzed by the first destination queuing stage D1 for determining the first destination criteria. In cooperation with the first optical transmitter TX1, and in particular by taking into account the optical resources available to reach the optical nodes in the optical ring network OR, the first destination queuing stage D1 queues the first aggregate packet AP'. The duration of the queuing depends then of the first destination criteria which combines the destination to be reach and the optical resources in use for the time-being and for the next coming time slots in the optical ring network OR.

In an embodiment the first destination criteria is determined by enforcing the stability of the optical ring network OR. This is achieved by minimizing the duration of the processing of the data packets in the first optical insertion layer OL1, and according to the target destination of the first aggregated packet.

In an example, the first aggregated packet AP' is addressed to the fifth optical node ON5 which uses a specific wavelength for receiving optical signals. However, said specific wavelength is already booked by another optical node transmitting to the fifth optical node ON5. Therefore, the first destination queuing stage D1 places the first aggregated packet AP' in a waiting queue, and processes other queues comprising other aggregated packets. Such mechanism is advantageous to avoid a blocking case at the first optical transmitter TX1 when a simple input/output mechanism is used such as First In First Out (FIFO) or Last In First Out (LIFO) etc. With such mechanism, an aggregated packet for which a transmitter awaits an available optical resource could take some time to be inserted in the optical ring network, whereas during this waiting insertion time, other aggregated packets are continuously queued, leading to more inserting delays that contribute to instability of the optical ring network.

Once an optical resource is made available, the first destination queuing stage D1 outputs the first aggregated packet AP' so that the first optical insertion layer OL1 provides it to the first optical transmitter TX1 through the internal electrical link B4.

The first optical transmitter TX1 inserts then the first aggregated packet AP' on the optical ring network OR so that it can be distributed to the appropriate destination optical node.

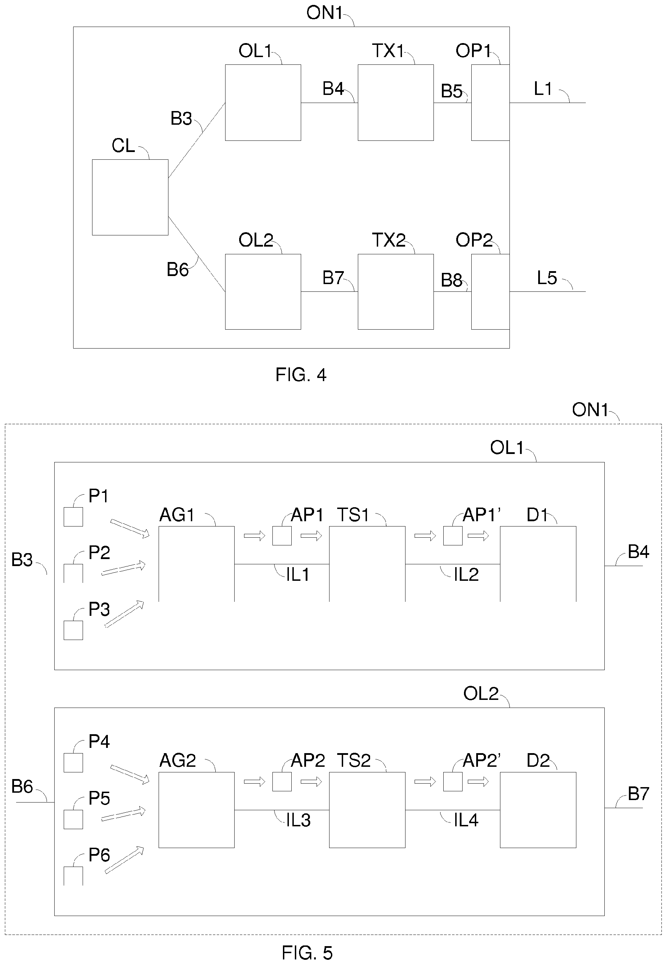

Referring to figure **FIG. 4****,** a schematic diagram of transmitting paths of another optical node according to an embodiment of the invention is depicted.

In an alternate embodiment, the first optical node ON1 comprises multiple transmitting paths, each comprising an optical insertion layer and a transmitter.

In an example the first optical node ON1 comprises a first transmitting path connected to the first optical link L1 and a second transmitting path connected to the fifth optical link L1. Such arrangement is used as an example, and other arrangements are possible. In another example the first and second transmitting paths are connected to the same optical link.

The first optical node ON1 comprises the client layer CL feeding in data packets the first and second transmitting paths.

The first transmitting path from the first optical node ON1 from figure FIG. 4 is similar to the transmitting chain of depicted in figure FIG. 2. Said first transmitting path comprises:
- the first optical insertion layer OL1 connected to the client layer CL through the internal electrical link B3,
- the first optical transmitter TX1, connected to the first optical insertion layer OL1 through the internal electrical link B4,
- the first optical output port OP1 connected to the first optical transmitter TX1 through the internal optical link B5, said first optical output port OP1 being connected to the first optical link L1

The second transmitting path from the first optical node ON1 comprises:
- a second optical insertion layer OL2 connected to the client layer CL through an internal electrical link B6,
- a second optical transmitter TX2, connected to the second optical insertion layer OL2 through an internal electrical link B7,
- a second optical output port OP2 connected to the second optical transmitter TX2 through an internal optical link B8, said second optical output port OP2 being connected to the fifth optical link L5.

In an embodiment, each of the first optical transmitter TX1 and the second optical transmitter TX2 has its own set of destinations to serve, so the same destination will not be served by more than a single transmitter. The client layer CL routes the data packets to the appropriate transmitting paths, the first transmitting path or second transmitting path, according to the destination to be served, namely the optical nodes from the optical ring network OR. An optical node with multiple transmission paths such as the first optical node ON1 is advantageous since a first routing of data packets is operated at the client layer, and then transmitters dedicated to specific destinations are able to insert efficiently packets on the optical network through the sharing of optical resources.

In a case an optical node needs to send more than a single transmitter capacity to some destination, dedicated fast-tunable transmitters to that destination can be used.

Referring to figure **FIG. 5****,** another schematic diagram of optical insertion layers from an optical node according to an embodiment of the invention is depicted.

Figure FIG. 5 depicts more in details the first insertion layer OL1 and the second insertion layer OL2 from the first optical node ON1 from figure FIG. 4.

In an embodiment, the first insertion layer OL1 from the first transmission path from figure FIG. 5 is similar in terms of structure than the first insertion layer OL1 from figure FIG. 3.

The first aggregation stage AG1 aggregates data packets received from the client layer CL. The output from the first aggregation stage AG1 is a first aggregated packet AP1 which is provided to the first traffic shaper TS1 that ensures that the traffic capacity to be inserted on the optical ring network OR is admissible in terms of stability of said optical ring network OR. The first traffic shaper TS1 provides then the processed first aggregated packet AP1' to the first destination queuing stage D1, that queues said first aggregated packet AP1' in a queue corresponding to one of the destination assigned to the first optical transmitter TX1. Once optical resources are available to reach the destination of the first aggregated packet AP1', the first optical transmitter TX1 converts from the electrical domain to the optical domain said first aggregated packet AP1' in order to transmit it on the optical ring network OR.

In an embodiment, the second insertion layer OL2 from the second transmission path from figure FIG. 5 comprises the same functionalities as the first insertion layer OL1. The processing of the second insertion layer OL2 is done in parallel from the processing of the first insertion layer OL1. Whilst the first insertion layer OL1 contributes to inserting data addressed to a specific pool of destinations, the second insertion layer OL2 manages the insertion of data addressed to another pool of destinations.

The second insertion layer OL2 comprises:
- a second aggregation stage AG2,
- a second traffic shaper TS2,
- a second destination queuing stage D2,
- an internal link IL3 linking the second aggregation stage AG2 with the second traffic shaper TS2 for exchanging data,
- an internal link IL4 linking the second traffic shaper TS2 with the second destination queuing stage D2 for exchanging data.

At a given instant or time slot in the optical ring network OR and in the first optical node ON1, the first optical insertion layer OL1 processes the first data packet P1, the second data packet P2 and the third data packet P3, all three data packets being received from the client layer CL and addressed to the third optical node ON3 in an example.

Simultaneously, and in an independent manner, the second insertion layer OL2 processes a fourth data packet P4, a fifth data packet P5 and a sixth data packet P6, all three data packets being received from the client layer CL and addressed to the fifth optical node ON5 in this example.

The second aggregation stage AG2 aggregates the fourth data packet P4, the fifth data packet P5 and the sixth data packet P6 into a second aggregated data packet AP2.

It should be noted that at this aggregating phase, it is possible for the second aggregation stage AG2 to aggregate data packets in function of the destination assigned to the second transmission path. The same possibility applies for the first aggregation stage AG1.

The second aggregation stage AG2 provides the second aggregated packet AP2 to the second traffic shaper TS2, through the internal link IL3.

The second traffic shaper TS2 processes then the second aggregated packet AP2 in order to output in the form of the second aggregated packet AP2'. During the processing, the second traffic shaper TS2 checks the stability conditions of the optical ring network OR. In a similar way as the first traffic shaper TS1 from the first transmission path or from figure FIG. 3, the second traffic shaper TS2 uses a traffic shaping mechanism such as token bucket or leaky bucket for controlling the arrival rate of the packets entering into the output stages of the first optical node ON1. The bucket (token or leaky) will allow the optical packet to pass only if the total capacity of the bucket is not over-loaded. Otherwise, the packet will be rejected in order to ensure the network stability in terms of overload, jittering, and packet loss. The second traffic shaper TS2 allowable rate defines another threshold which is preconfigured for the second optical transmitter TX2, and depends on the total transit traffic on the wavelengths. The second traffic shaper TS2 ensures that the number of outputted packets does not go above said other threshold. The second traffic shaper TS2 may also be configured on the fly depending on the load of the optical ring network OR. Such configuration of the second traffic shaper TS2 may be handled by network control/supervisor or by management/control plane distributed amongst the optical nodes from the optical ring network OR.

The second traffic shaper TS2 outputs the second aggregated packet AP2' to the second destination queuing stage D2, through the internal link IL4.

The second destination queuing stage D2 receives the second aggregated packet AP2' and then processes it according to a second destination criteria.

The destination or target optical node of the second aggregated packet AP2' is analyzed by the second destination queuing stage D2 for determining the second destination criteria. In cooperation with the second optical transmitter TX2, the second destination queuing stage D2 stores the second aggregate packet AP2' in a waiting list in function of its destination, and in function of available optical resources which combination corresponds to the second destination criteria.

Once an optical resource is made available, the second destination queuing stage D2 outputs the second aggregated packet AP2' so that the second optical insertion layer OL2 provides it to the second optical transmitter TX2 through the internal electrical link B7.

The second optical transmitter TX2 inserts then the second aggregated packet AP2' on the optical ring network OR so that it can be distributed to the appropriate destination optical node, namely the fifth optical node ON5 in this example.

In an embodiment, the first optical transmitter TX1 inserts the first aggregated packet AP1' first, and the second optical transmitter TX2 inserts the second aggregated packet AP2'. Such insertion order is advantageous, since it allows to configure the right amount of traffic that can be inserted by any of the first and second transmitters, in order to preserve the stability of the optical ring network OR.

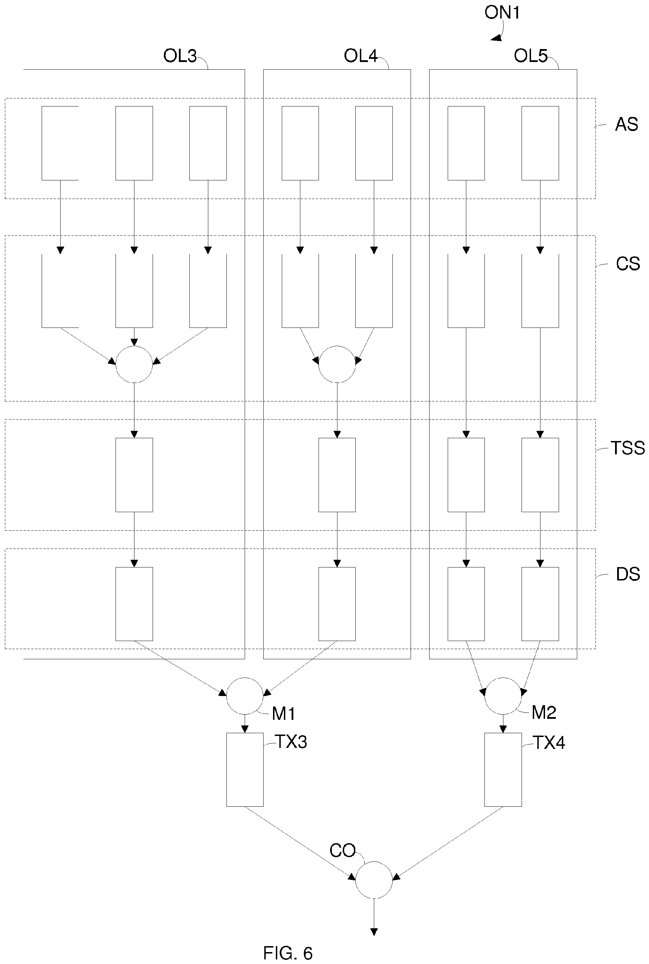

Referring to figure **FIG. 6****,** a schematic block diagram of an optical network according to an embodiment of the invention is depicted.

The figure FIG. 6 depicts an optical node comprising multiple transmission paths involving multiple optical insertion layers.

In an embodiment, the first optical node ON1 comprises three transmission paths for inserting packets on the optical ring network OR, said three transmissions paths complementing the first transmission path and the second transmission path as depicted in figure FIG. 4. It should be noted that such number of transmission paths and their arrangements are for explanation purposes, and that less or more transmission paths with different arrangements are possible too.

A third transmission path comprises:
- a third insertion layer OL3 provided with data packets by the client layer,
- a first multiplexer M1,
- a third optical transmitter TX3,
- the third insertion layer OL3, the first multiplexer M1 and the third optical transmitter TX3 being linked through electrical links.

A fourth transmission path comprises:
- a fourth insertion layer OL4 provided with data packets by the client layer,
- the first multiplexer M1,
- the third optical transmitter TX3,
- the fourth insertion layer OL4, the first multiplexer M1 and the third optical transmitter TX3 being linked through electrical links.

The third and fourth transmission paths are using the same optical transmitter, the third optical transmitter TX3, and the first multiplexer is used to multiplex in the electrical domain the aggregated packets outputted by each of said optical insertion layers.

A fifth transmission path comprises:
- a fifth insertion layer OL5 provided with data packets by the client layer,
- a second multiplexer M2,
- a fourth optical transmitter TX4,
- the fifth insertion layer OL5, the second multiplexer M2 and the fourth optical transmitter TX4 being linked through electrical links.

The fifth insertion layer OL5 of the fifth transmission path comprises two outputs that are multiplexed together by the second multiplexer M2 that feeds the fourth optical transmitter TX4.

The aggregation block AS in dashed lines encompasses the aggregation stages of the third optical insertion layer OL3, the fourth optical insertion layer OL4 and the fifth insertion layer OL5.

In an example the third optical insertion layer OL3 comprises three aggregation stages, whereas the fourth optical insertion layer OL4 and the fifth insertion layer OL5 comprise each two aggregation stages. Each of the aggregation stage from the third optical insertion layer OL3 is assigned to a specific pool of destination optical nodes. In the same manner, each of the aggregation stages of the fourth optical insertion layer OL4 and the fifth optical insertion layer OL5 is dedicated to specific pool of destinations.

An optical insertion layer managing multiple aggregation stages is advantageous for building aggregated packets in parallel as a function of their destinations on the optical ring network OR. It allows the availability of aggregated packets for a given destination
whereas other aggregated packets for another destination are being assembled.

Each aggregation stage of each of the optical insertion layers' outputs aggregated packets that are provided to a criteria queuing stage.

A criteria queuing block CS is depicted in dashed lines. It encompasses criteria queuing stages of each of the optical insertion layers OL3, OL4 and OL5. In an embodiment, a criteria queuing stage is an additional queuing stage that cooperate with the aggregations stages, the traffic shaping stages and the destination queuing stages in order to further improve and guarantee the stability of the optical ring network.

In an example the third optical layer OL3 comprises 3 criteria queuing stages, each one cooperating with one of the aggregations stages of said third optical layer OL3, each criteria queuing stages being further connected to a packet multiplexer. The fourth optical insertion layer OL4 comprises two criteria queuing stages, each one being connected to one of the aggregations stages of said optical insertion layer OL4, and each criteria queuing stage being connected to a packet multiplexer. The fifth optical layer OL5 comprises two criteria queuing stages, each connected to one of the aggregation stages, and further outputting processed aggregated packets to the next queuing stages of the fifth optical layer OL5.

A criteria queuing stage processes an aggregated packet provided by the corresponding aggregation stage. Said criteria queuing stage applies a first queuing criteria in the processing of the aggregated data packet.

In an example the first queuing criteria is a quality of service criteria. The criteria queuing stage determines for each received aggregated data packet the required quality of service. Said quality of service information may be available in-bound the aggregated data packet, in a dedicated header, or individually in each of the data packets comprised in said aggregated packet, or such quality of service information could be derived from the source of the data packets. For a traffic requiring low latency but small capacity, the criteria queuing stage may apply the first queuing criteria to process in priority aggregated packets corresponding to such traffic service rather than other aggregated packets.

In another example the first queuing criteria is a class of service criteria. The class of service criteria defines for a given type traffic or signaling services constraints for the insertion of associated data packets. These constraints may be for example latency and jitter parameters to be enforced for sensitive traffic belonging to a given class of service.

In yet another example the first queuing criteria is a first-in-first-out criteria. The criteria queuing stage applies a first-in-first-out policy on the arrival of aggregated packets. When multiple criteria queuing stages are used in an optical insertion layer, for example the third optical insertion layer OL3, the first-in-first-out criteria may apply on the output of each criteria queuing stage, so that the data multiplexer combines the queued packets in their order of arrival.

In yet another example, each of the criteria queuing stage of each of the optical insertion layer may apply a chose first destination criteria. The choice of the first destination criteria may be dictated by kind of service to be served which can depend on the destination of the data packets in an example.

In an embodiment, the criteria queuing stage operates between the aggregation stage and the traffic shaper.

In another embodiment, the criteria queuing stage operates between the traffic shaper and the destination queuing stage.

In yet another embodiment an optical insertion layer comprises two or more criteria queuing stages. In an example one of the criteria queuing stages is dedicated to Quality of Service processing whereas another criteria queuing stage is dedicated to Class of Service processing.

The data multiplexers of the third optical insertion layer OL3 and the fourth optical insertion layer OL4, and the criteria queuing stages of the fifth optical insertion layer OL5 provides their processed aggregated packets to the traffic shaper stages.

A traffic shaping block TSS in dashed lines encompasses the traffic shaper stages of the third optical insertion layer OL3, the fourth insertion layer OL4 and the fifth optical insertion layer OL5. Said traffic shaper stages comprises similar features than the first traffic shaper TS1 from figures FIG. 3 or FIG. 5, and the second traffic shaper TS2 from figure FIG. 5.

The traffic shapers from the traffic shaping block TSS processes the aggregated data packet (previously processed and queued by the aggregation stages and the criteria queuing stages) by using traffic shaping mechanisms in for avoiding overloads or bottlenecks at the following stages, in order to enforce stability of the optical ring network OR.

Each traffic shaper of the optical insertion layers OL3, OL4 and OL5 outputs processed aggregated packets that are provided to destination queuing stages.

A destination queuing block DS is depicted in dashed lines and comprises destination queuing stage for each of the third optical insertion layer OL3, the fourth optical insertion layer OL4 and the fifth optical insertion layer OL5. Such destination queuing stages operate in a similar manner as the first destination queuing stage D1 from figure FIG. 3 and FIG. 5 or the second destination queuing stage D2 from FIG. 5.

The respective destination queuing stages apply their destination criteria for processing the received aggregated data packets, and for outputting them appropriately when optical resources are available for carrying data to a specific destination.

The destination queuing stage from the third optical insertion layer OL3 provides queued aggregated data packets to a first packet multiplexer M1, which also receives queued aggregated data packets from the fourth optical insertion layer OL4. The first packet multiplexer M1 feeds then the third optical transmitter TX3 with the aggregated data packets.

The output of the two destination queuing stages from the fifth optical insertion layer OL5 are multiplexed by a second packet multiplexer M2. Said second packet multiplexer M2 provides the multiplexed aggregated data packets to the fourth optical transmitter TX4.

The third optical transmitter TX3 and the fourth optical transmitter TX4 generate optical signals respectively from the output from the first multiplexer M1 and the second multiplexer M2. The generated optical signals are combined then by an optical coupler CO, before being optically transmitted on the optical ring network OR. In an optical packet switching network, the generated optical signals are in the form of optical packet signals, whereas in the case of optical burst switching networks, the optical signals are in the form of bursts of lights.

In an embodiment, the third optical transmitter TX3 inserts first its generated optical packets, and the fourth optical transmitter TX4 inserts then its generated optical signal. Such insertion order is advantageous, since it allows to configure or split the right amount of traffic that can be inserted by any of the third and fourth transmitters, in order to preserve the stability of the optical ring network OR.

When the resources of the communication network are bottlenecks, Quality of Services and Class of Services notions are used to provide indications on the constraints related to a content to be delivered. For example QoS constraints related to a Voice over Internet Protocol (VoIP) define specific latency and packet loss rate in order to ensure perceived voice quality. QoS and CoS make it possible to prioritize the various content to be delivered. Whilst such mechanism may help a communication network in the content delivery, they may not be sufficient.

It should be noted that the stability of an OPS or OBS optical network relates to the insertion process, and is a direct consequence of the possibility given to a fast-wavelength tunable transmitter to choose between several insertion wavelengths, when inserting the optical packet to the optical ring network. In such system, the insertion, i.e. the optical packet service probability depends on the availability of each wavelength. The total insertion capacity cannot be calculated simply as a sum of all wavelength availabilities. Indeed, its value is below the mentioned sum.

The embodiments involve processing of data traffic at the client layer through a step of aggregation, a step of traffic shaping, and a step of destination queuing, and advantageously offer a fine management of the resources of the optical communication network. The embodiments offer a solution to the deficiencies of the QoS or CoS processing whilst guaranteeing the stability of the optical ring network.

The aggregating/traffic shaping/destination queuing steps may be combined with CoS or QoS processing which further enhance the ability of a smooth insertion of data on the optical communication network.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for transmitting optical packets by an optical node (ON1) in an optical network (OR), said optical network (OR) being an optical packet switching network, said optical node (ON1) comprising a first optical transmitter (TX1) and a first optical packet insertion layer (OL1) cooperating with said first optical transmitter (TX1) and comprising a first aggregation stage (AG1), a first traffic shaper (TS1) and a destination queuing stage (D1), the method comprising the following steps:
- aggregating of a first data packet (P1) to be transmitted on the optical network (OR) with other data packets (P2; P3) to be transmitted on said optical network (OR), said step of aggregating being performed by the first aggregation stage (AG1) and resulting into a first aggregated packet (AP; AP1) comprising the first data packet (P1),
- processing of the first aggregated packet (AP; AP1) by the first traffic shaper (TS1), said first aggregated packet (AP; AP1) being provided by the first aggregation stage (AG1) to the first traffic shaper (TS1), said step of processing by the first traffic shaper (TS1) limiting the number of packets processed by the first destination queuing stage (D1) below a threshold, said threshold being determined from an optical transmitting capacity from the optical node (ON1),
- queuing of the first aggregated packet (AP'; AP1') by the first destination queuing stage (D1), said first aggregated packet (AP'; AP1') being provided by the first traffic shaper (TS1) to the first destination queuing stage (D1), said first destination queuing stage processing the first aggregated packet (AP'; AP1') according to a first destination criteria,
- providing the first aggregated packet (AP'; AP1') by the first destination queuing stage (D1) to the first optical transmitter (TX1),
- transmitting a first optical packet by the first optical transmitter (TX1) on the optical network (OR), said first optical packet comprising the first aggregated packet (AP'; AP1').

2. A method according to claim 1 further comprising a step of criteria queuing of the first aggregated packet by a criteria queuing stage (CSS) comprised in the first optical packet insertion layer (OL1), said criteria queuing stage processing the first aggregated packet (AP; AP1) according to a first queuing criteria.

3. A method according to any of the claims 1 to 2, wherein the first queuing criteria is selected from the group consisting of a quality of service criteria, a class of service criteria, and a first-in first-out criteria.

4. A method according to any of the claims 1 to 3, wherein the first destination criteria is determined:
- to minimize the duration of the processing of the first data packet by the first optical insertion layer (OL1), and
- according to a target destination from the first aggregated packet.

5. A method according to any of the claims 1 to 4, wherein the optical node (ON1) further comprises a second optical transmitter (TX2) and a second optical packet insertion layer (OL2) cooperating with said second optical transmitter (TX2) and comprising a second aggregation stage (AG2), a second traffic shaper (TS2) and a second destination queuing stage (D2), said method further comprising the following steps:
- aggregating of a second data packet (P4) to be transmitted on the optical network (OR) with other data packets (P5; P6) to be transmitted on said optical network (OR), said step of aggregating being performed by the second aggregation stage (AG2) and resulting into a second aggregated packet (AP2) comprising the second data packet,
- processing of the second aggregated packet (AP2) by the second traffic shaper (TS2), said second aggregated packet (AP2) being provided by the second aggregation stage (AG2) to the second traffic shaper (TS2), said step of processing by the second traffic shaper (TS2) limiting the number of packets processed by the second destination queuing stage (D2) below another threshold, said other threshold being determine from the optical transmitting capacity from the optical node (ON1),
- queuing of the second aggregated packet (AP2') by the second destination queuing stage (D2), said second aggregated packet (AP2') being provided by the second traffic shaper (TS2) to the second destination queuing stage (D2), said second destination queuing stage (D2) processing the second aggregated packet (AP2') according to a second destination criteria,
- providing the second aggregated packet (AP2') by the second destination queuing stage (D2) to the second optical transmitter (TX2),
- transmitting a second optical packet by the second optical transmitter (TX2) on the optical network (OR), said second optical packet comprising the second aggregated packet (AP2').

6. A method according to claim 5, wherein the step of transmitting the first optical packet by the first optical transmitter (TX1) is performed and then the step of transmitting the second optical packet by the second optical transmitter (TX2) is performed.

7. A method according to any of the claims 5 to 6, wherein the second destination criteria is determined:
- to minimize the duration of the processing of the second data packet by the second optical insertion layer (OL2), and
- according to a target destination from the second aggregated packet (AP2).

8. An optical node (ON1) in an optical network (OR) being an optical packet switching network, said optical node (ON1) comprising:
- a first optical transmitter (TX1) for transmitting optical packets on the optical network (OR),
- a first optical packet insertion layer (OL1) cooperating with said first optical transmitter (TX1),
said first optical packet insertion layer (OL1) comprising:
- a first aggregation stage for aggregating a first data packet (AP1) to be transmitted on the optical network (NW) with other data packets (P2; P3) to be transmitted on said optical network (OR), and for outputting a first aggregated packet (AP; AP1) comprising the first data packet (P1),
- a first traffic shaper (TS1) for processing the first aggregated packet (AP1) being provided by the first aggregation stage (AG1), said first traffic shaper (TS1) limiting the number of packets processed by a first destination queuing stage (D1) below a threshold, said threshold being determined from the optical transmitting capacity from the optical node (ON1),
- a first destination queuing stage (D1) for queuing the first aggregated packet (AP'; AP1') being provided by the first traffic shaper (TS1), said first destination queuing stage (D1) processing the first aggregated packet (AP'; AP1') according to a first destination criteria and then providing the first aggregated packet to the first optical transmitter (TX1).

9. An optical node (ON1) according to claim 8, wherein the first optical packet insertion layer (OL1) further comprises a criteria queuing stage (CSS) for queuing of the first aggregated packet (AP; AP1) according to a first queuing criteria selected from the group consisting of a quality of service criteria, a class of service criteria, and a first-in first-out criteria.

10. An optical node (ON1) according to any of the claims 8 to 9, wherein the first destination criteria is determined:
- to minimize the duration of the processing of the first data packet by the first optical insertion layer (OL1), and
- according to a target destination from the first aggregated packet (AP; AP1).

11. An optical node (ON1) according to any of the claims 8 to 10 further comprising:
- a second optical transmitter (TX2) for transmitting optical packets on the optical network (OR),
- a second optical packet insertion layer (OL2) cooperating with said second optical transmitter (TX2),
said second optical packet insertion layer (OL2) comprising:
- a second aggregation stage (AG2) for aggregating a second data packet (P3) to be transmitted on the optical network (NW) with other data packets (P4; P5) to be transmitted on said optical network (OR), and for outputting a second aggregated packet (AG2) comprising the second data packet (P2),
- a second traffic shaper (TS2) for processing the second aggregated packet (AG2) being provided by the second aggregation stage (AG2), said second traffic shaper (TS2) limiting the number of packets processed by a second destination queuing stage (D2) below another threshold, said other threshold being determined from the optical transmitting capacity from the optical node (ON1),
- a second destination queuing stage (D2) for queuing the second aggregated packet (AP2') being provided by the second traffic shaper (TS2), said second destination queuing stage (D2) processing the second aggregated packet (AP2') according to a second destination criteria and then providing the second aggregated packet to the second optical transmitter (TX2).

12. An optical node (ON1) according to the claim 11 wherein the first optical transmitter (TX1) is adapted for transmitting the first aggregated packet (AP1') before the transmitting of the second aggregated packet (AP2') by the second optical transmitter (TX2).

## Patentansprüche

1. Verfahren zum Übertragen von optischen Paketen durch einen optischen Knoten (ON1) in einem optischen Netzwerk (OR), wobei das optische Netzwerk (OR) ein paketvermitteltes Netzwerk ist, wobei der optische Knoten (ON1) einen ersten optischen Sender (TX1) und eine erste optische Paketeinfügungsschicht (OL1) umfasst, die mit dem ersten optischen Sender (TX1) zusammenwirkt und eine erste Aggregationsstufe (AG1), einen ersten Verkehrsformer (TS1) und eine Zielwarteschlangeneinreihungsstufe (D1) umfasst, wobei das Verfahren die folgenden Schritte umfasst:
- Aggregieren eines ersten Datenpakets (P1), das im optischen Netzwerk (OR) zu übertragen ist, mit anderen Datenpaketen (P2; P3), die im optischen Netzwerk (OR) zu übertragen sind, wobei der Schritt des Aggregierens von der ersten Aggregationsstufe (AG1) durchgeführt wird und in einem ersten aggregierten Paket (AP; AP1) resultiert, das das erste Datenpaket (P1) umfasst,
- Verarbeiten des ersten aggregierten Pakets (AP; AP1) durch den ersten Verkehrsformer (TS1), wobei das erste aggregierte Paket (AP; AP1) dem ersten Verkehrsformer (TS1) von der ersten Aggregationsstufe (AG1) bereitgestellt wird, wobei der Schritt des Verarbeitens durch den ersten Verkehrsformer (TS1) die Anzahl von Paketen, die von der ersten Zielwarteschlangeneinreihungsstufe (D1) verarbeitet werden, unter einen Schwellwert begrenzt, wobei der Schwellwert anhand einer optischen Übertragungskapazität vom optischen Knoten (ON1) bestimmt wird,
- Einreihen des ersten aggregierten Pakets (AP'; AP1') in eine Warteschlange durch die erste Zielwarteschlangeneinreihungsstufe (D1), wobei das erste aggregierte Paket (AP'; AP1') der ersten Zielwarteschlangeneinreihungsstufe (D1) vom ersten Verkehrsformer (TS1) bereitgestellt wird, wobei die erste Zielwarteschlangeneinreihungsstufe das erste aggregierte Paket (AP'; AP1') gemäß einem ersten Zielkriterium verarbeitet,
- Bereitstellen des ersten aggregierten Pakets (AP'; AP1') für den ersten optischen Sender (TX1) durch die erste Zielwarteschlangeneinreihungsstufe (D1),
- Übertragen eines ersten optischen Pakets durch den ersten optischen Sender (TX1) im optischen Netzwerk (OR), wobei das erste optische Paket das erste aggregierte Paket (AP'; AP1') umfasst.

2. Verfahren nach Anspruch 1, das ferner einen Schritt der Kriterienwarteschlangeneinreihung des ersten aggregierten Pakets durch eine Kriterienwarteschlangeneinreihungsstufe (CSS), die in der ersten optischen Paketeinfügungsschicht (OL1) umfasst ist, umfasst, wobei die Kriterienwarteschlangeneinreihungsstufe das erste aggregierte Paket (AP; AP1) gemäß einem ersten Warteschlangeneinreihungskriterium verarbeitet.

3. Verfahren nach einem der Ansprüche 1 bis 2, wobei das erste Warteschlangeneinreihungskriterium aus der Gruppe ausgewählt ist, die aus einem Dienstgütekriterium, einem Dienstklassenkriterium und einem First-in-First-out-Kriterium besteht.

4. Verfahren nach einem der Ansprüche 1 bis 3, wobei das erste Zielkriterium bestimmt wird:
- durch Minimieren der Dauer der Verarbeitung des ersten Datenpakets durch die erste optische Einfügungsschicht (OL1), und
- gemäß einem Sollziel des ersten aggregierten Pakets.

5. Verfahren nach einem der Ansprüche 1 bis 4, wobei der optische Knoten (ON1) ferner einen zweiten optischen Sender (TX2) und eine zweite optische Paketeinfügungsschicht (OL2) umfasst, die mit dem zweiten optischen Sender (TX2) zusammenwirkt und eine zweite Aggregationsstufe (AG2), einen zweiten Verkehrsformer (TS2) und eine zweite Zielwarteschlangeneinreihungsstufe (D2) umfasst, wobei das Verfahren die folgenden Schritte umfasst:
- Aggregieren eines zweiten Datenpakets (P4), das im optischen Netzwerk (OR) zu übertragen ist, mit anderen Datenpaketen (P5; P6), die im optischen Netzwerk (OR) zu übertragen sind, wobei der Schritt des Aggregierens von der zweiten Aggregationsstufe (AG2) durchgeführt wird und in einem zweiten aggregierten Paket (AP2) resultiert, das das zweite Datenpaket umfasst,
- Verarbeiten des zweiten aggregierten Pakets (AP2) durch den zweiten Verkehrsformer (TS2), wobei das zweite aggregierte Paket (AP2) dem zweiten Verkehrsformer (TS2) von der zweiten Aggregationsstufe (AG2) bereitgestellt wird, wobei der Schritt des Verarbeitens durch den zweiten Verkehrsformer (TS2) die Anzahl von Paketen, die von der zweiten Zielwarteschlangeneinreihungsstufe (D2) verarbeitet werden, unter einen anderen Schwellwert begrenzt, wobei der andere Schwellwert anhand der optischen Übertragungskapazität vom optischen Knoten (ON1) bestimmt wird,
- Einreihen des zweiten aggregierten Pakets (AP2') in eine Warteschlange durch die zweite Zielwarteschlangeneinreihungsstufe (D2), wobei das zweite aggregierte Paket (AP2') der zweiten Zielwarteschlangeneinreihungsstufe (D2) vom zweiten Verkehrsformer (TS2) bereitgestellt wird, wobei die zweite Zielwarteschlangeneinreihungsstufe (D2) das zweite aggregierte Paket (AP2') gemäß einem zweiten Zielkriterium verarbeitet,
- Bereitstellen des zweiten aggregierten Pakets (AP2') für den zweiten optischen Sender (TX2) durch die zweite Zielwarteschlangeneinreihungsstufe (D2),
- Übertragen eines zweiten optischen Pakets durch den zweiten optischen Sender (TX2) im optischen Netzwerk (OR), wobei das zweite optische Paket das zweite aggregierte Paket (AP2') umfasst.

6. Verfahren nach Anspruch 5, wobei der Schritt des Übertragens des ersten optischen Pakets vom ersten optischen Sender (TX1) durchgeführt wird und dann der Schritt des Übertragens des zweiten optischen Pakets vom zweiten optischen Sender (TX2) durchgeführt wird.

7. Verfahren nach einem der Ansprüche 5 bis 6, wobei das zweite Zielkriterium bestimmt wird:
- durch Minimieren der Dauer der Verarbeitung des zweiten Datenpakets durch die zweite optische Einfügungsschicht (OL2), und
- gemäß einem Sollziel des zweiten aggregierten Pakets (AP2) .

8. Optischer Knoten (ON1) in einem optischen Netzwerk (OR), das ein optisches paketvermitteltes Netzwerk ist, wobei der optische Knoten (ON1) Folgendes umfasst:
- einen ersten optischen Sender (TX1) zum Übertragen von optischen Paketen im optischen Netzwerk (OR),
- eine erste optische Paketeinfügungsschicht (OL1), die mit dem ersten optischen Sender (TX1) zusammenwirkt,
wobei die erste optische Paketeinfügungsschicht (OL1) Folgendes umfasst:
- eine erste Aggregationsstufe zum Aggregieren eines ersten Datenpakets (AP1), das im optischen Netzwerk (NW) zu übertragen ist, mit anderen Paketen (P2; P3), die im optischen Netzwerk (OR) zu übertragen sind, und zum Ausgeben eines ersten aggregierten Pakets (AP; AP1), das das erste Datenpaket (P1) umfasst,
- einen ersten Verkehrsformer (TS1) zum Verarbeiten des ersten aggregierten Pakets (AP1), das von der ersten Aggregationsstufe (AG1) bereitgestellt wird, wobei der erste Verkehrsformer (TS1) die Anzahl von Paketen, die von einer ersten Zielwarteschlangeneinreihungsstufe (D1) verarbeitet werden, unter einen Schwellwert begrenzt, wobei der Schwellwert anhand der optischen Übertragungskapazität vom optischen Knoten (ON1) bestimmt wird,
- eine erste Zielwarteschlangeneinreihungsstufe (D1) zum Einreihen des ersten aggregierten Pakets (AP'; AP1'), das vom ersten Verkehrsformer (TS1) bereitgestellt wird, in eine Warteschlange, wobei die erste Zielwarteschlangeneinreihungsstufe (D1) das erste aggregierte Paket (AP'; AP1') gemäß einem ersten Zielkriterium verarbeitet und das aggregierte Paket dann dem ersten optischen Sender (TX1) bereitstellt.

9. Optischer Knoten (ON1) nach Anspruch 8, wobei die erste optische Paketeinfügungsschicht (OL1) ferner eine Kriterienwarteschlangeneinreihungsstufe (CSS) zum Einreihen des ersten aggregierten Pakets (AP; AP1) gemäß einem ersten Warteschlangeneinreihungskriterium, das aus der Gruppe ausgewählt ist, die aus einem Dienstgütekriterium, einem Dienstklassenkriterium und einem First-in-First-out-Kriterium besteht, in eine Warteschlange umfasst.

10. Optischer Knoten (ON1) nach einem der Ansprüche 8 bis 9, wobei das erste Zielkriterium bestimmt wird:
- durch Minimieren der Dauer der Verarbeitung des ersten Datenpakets durch die erste optische Einfügungsschicht (OL1), und
- gemäß einem Sollziel des ersten aggregierten Pakets (AP; AP1) .

11. Optischer Knoten (ON1) nach einem der Ansprüche 8 bis 10, der ferner Folgendes umfasst:
- einen zweiten optischen Sender (TX2) zum Übertragen von optischen Paketen im optischen Netzwerk (OR),
- eine zweite optische Paketeinfügungsschicht (OL2), die mit dem zweiten optischen Sender (TX2) zusammenwirkt,
wobei die zweite optische Paketeinfügungsschicht (OL2) Folgendes umfasst:
- eine zweite Aggregationsstufe (AG2) zum Aggregieren eines zweiten Datenpakets (P3), das im optischen Netzwerk (NW) zu übertragen ist, mit anderen Paketen (P4; P5), die im optischen Netzwerk (OR) zu übertragen sind, und zum Ausgeben eines zweiten aggregierten Pakets (AG2), das das zweite Datenpaket (P2) umfasst,
- einen zweiten Verkehrsformer (TS2) zum Verarbeiten des zweiten aggregierten Pakets (AG2), das von der zweiten Aggregationsstufe (AG2) bereitgestellt wird, wobei der zweite Verkehrsformer (TS2) die Anzahl von Paketen, die von einer zweiten Zielwarteschlangeneinreihungsstufe (D2) verarbeitet werden, unter einen anderen Schwellwert begrenzt, wobei der andere Schwellwert anhand der optischen Übertragungskapazität vom optischen Knoten (ON1) bestimmt wird,
- eine zweite Zielwarteschlangeneinreihungsstufe (D2) zum Einreihen des zweiten aggregierten Pakets (AP2'), das vom zweiten Verkehrsformer (TS2) bereitgestellt wird, in eine Warteschlange, wobei die zweite Zielwarteschlangeneinreihungsstufe (D2) das zweite aggregierte Paket (AP2') gemäß einem zweiten Zielkriterium verarbeitet und das zweite aggregierte Paket dann dem zweiten optischen Sender (TX2) bereitstellt.

12. Optischer Knoten (ON1) nach Anspruch 11, wobei der erste optische Sender (TX1) zum Übertragen des ersten aggregierten Pakets (AP1') vor dem Übertragen des zweiten aggregierten Pakets (AP2') durch den zweiten optischen Sender (TX2) angepasst ist.

## Revendications

1. Procédé de transmission de paquets optiques par un nœud optique (ON1) sur un réseau optique (OR), dans lequel ledit réseau optique (OR) est un réseau de commutation de paquets optiques, dans lequel ledit nœud optique (ON1) comprend un premier émetteur optique (TX1) et une première couche d'insertion de paquets optiques (OL1) qui coopère avec ledit premier émetteur optique (TX1) et qui comprend un premier étage d'agrégation (AG1), un premier modélisateur de trafic (TS1) et un étage de mise en file d'attente de destination (D1), dans lequel le procédé comprend les étapes suivantes :
- l'agrégation d'un premier paquet de données (P1) à transmettre sur le réseau optique (OR) avec d'autres paquets de données (P2 ; P3) à transmettre sur ledit réseau optique (OR), dans lequel ladite étape d'agrégation est exécutée par le premier étage d'agrégation (AG1) et engendre un premier paquets agrégé (AP ; AP1) qui comprend le premier paquet de données (P1),
- le traitement du premier paquet agrégé (AP ; AP1) par le premier modélisateur de trafic (TS1), dans lequel ledit premier paquet agrégé (AP ; AP1) est fourni par le premier étage d'agrégation (AG1) au premier modélisateur de trafic (TS1), dans lequel ladite étape de traitement par le premier modélisateur de trafic (TS1) limite le nombre de paquets traités par le premier étage de mise en file d'attente de destination (D1) sous un seuil, dans lequel ledit seuil est déterminé à partir d'une capacité de transmission optique par le nœud optique (ON1),
- la mise en file d'attente du premier paquet agrégé (AP' ; AP1') par le premier étage de mise en file d'attente de destination (D1), dans lequel ledit premier paquet agrégé (AP' ; AP1') est fourni par le premier modélisateur de trafic (TS1) au premier étage de mise en file d'attente de destination (D1), dans lequel ledit premier étage de mise en file d'attente de destination traite le premier paquet agrégé (AP' ; AP1') selon un premier critère de destination,
- la fourniture du premier paquet agrégé (AP' ; AP1') par le premier étage de mise en file d'attente de destination (D1) au premier émetteur optique (TX1),
- la transmission d'un premier paquet optique par le premier émetteur optique (TX1) sur le réseau optique (OR), dans lequel ledit premier paquet optique comprend le premier paquet agrégé (AP' ; AP1').

2. Procédé selon la revendication 1, qui comprend en outre une étape de mise en file d'attente selon des critères du premier paquet agrégé par un étage de mise en file d'attente selon des critères (CSS) compris dans la première couche d'insertion de paquet optique (OL1), dans lequel ledit étage de mise en file d'attente selon des critères traite le premier paquet agrégé (AP ; AP1) selon un premier critère de mise en file d'attente.

3. Procédé selon l'une quelconque des revendications 1 à 2, dans lequel le premier critère de mise en file d'attente est sélectionné parmi le groupe qui consiste en un critère de qualité de service, un critère de catégorie de service, et un critère de premier entré/premier sorti.

4. Procédé selon l'une quelconque des revendications 1 à 3, dans lequel le premier critère de destination est déterminé :
- afin de minimiser la durée du traitement du premier paquet de données par la première couche d'insertion optique (OL1), et
- selon une destination cible du premier paquet agrégé.

5. Procédé selon l'une quelconque des revendications 1 à 4, dans lequel le nœud optique (ON1) comprend en outre un second émetteur optique (TX2) et une seconde couche d'insertion de paquets optiques (OL2) qui coopère avec ledit second émetteur optique (TX2) et qui comprend un second étage d'agrégation (AG2), un second modélisateur de trafic (TS2) et un second étage de mise en file d'attente de destination (D2), dans lequel ledit procédé comprend en outre les étapes suivantes :
- l'agrégation d'un second paquet de données (P4) à transmettre sur le réseau optique (OR) avec d'autres paquets de données (P5 ; P6) à transmettre sur ledit réseau optique (OR), dans lequel ladite étape d'agrégation est exécutée par le second étage d'agrégation (AG2) et engendre un second paquet agrégé (AP2) qui comprend le second paquet de données,
- le traitement du second paquet agrégé (AP2) par le second modélisateur de trafic (TS2), dans lequel ledit second paquet agrégé (AP2) est fourni par le second étage d'agrégation (AG2) au second modélisateur de trafic (TS2), dans lequel ladite étape de traitement par le second modélisateur de trafic (TS2) limite le nombre de paquets traités par le second étage de mise en file d'attente de destination (D2) sous un autre seuil, dans lequel ledit autre seuil est déterminé à partir de la capacité de transmission optique du nœud optique (ON1),
- la mise en file d'attente du second paquet agrégé (AP2') par le second étage de mise en file d'attente de destination (D2), dans lequel ledit second paquet agrégé (AP2') est fourni par le second modélisateur de trafic (TS2) au second étage de mise en file d'attente de destination (D2), dans lequel ledit second étage de mise en file d'attente de destination (D2) traite le second paquet agrégé (AP2') selon un second critère de destination,
- la fourniture du second paquet agrégé (AP2') par le second étage de mise en file d'attente de destination (D2) au second émetteur optique (TX2),
- la transmission d'un second paquet optique par le second émetteur optique (TX2) sur le réseau optique (OR), dans lequel ledit second paquet optique comprend le second paquet agrégé (AP2').

6. Procédé selon la revendication 5, dans lequel l'étape de transmission du premier paquet optique par le premier émetteur optique (TX1) est exécutée puis l'étape de transmission du second paquet optique par le second émetteur optique (TX2) est exécutée.

7. Procédé selon l'une quelconque des revendications 5 à 6, dans lequel le second critère de destination est déterminé :
- afin de minimiser la durée du traitement du second paquet de données par la seconde couche d'insertion optique (OL2), et
- selon une destination cible du second paquet agrégé (AP2).

8. Noeud optique (ON1) sur un réseau optique (OR) qui est un réseau de commutation de paquets optiques, dans lequel ledit nœud optique (ON1) comprend :
- un premier émetteur optique (TX1) destiné à transmettre des paquets optiques sur le réseau optique (OR),
- une première couche d'insertion de paquets optiques (OL1) qui coopère avec ledit premier émetteur optique (TX1),
dans lequel ladite première couche d'insertion de paquets optiques (OL1) comprend :
- un premier étage d'agrégation destiné à agréger un premier paquet de données (AP1) à transmettre sur le réseau optique (NW) avec d'autres paquets de données (P2 ; P3) à transmettre sur ledit réseau optique (OR), et à délivrer un premier paquet agrégé (AP ; AP1) qui comprend le premier paquet de données (P1),
- un premier modélisateur de trafic (TS1) destiné à traiter le premier paquet agrégé (AP1) fourni par le premier étage d'agrégation (AG1), dans lequel ledit premier modélisateur de trafic (TS1) limite le nombre de paquets traités par un premier étage de mise en file d'attente de destination (D1) sous un seuil, dans lequel ledit seuil est déterminé à partir de la capacité de transmission optique du nœud optique (ON1),
- un premier étage de mise en file d'attente de destination (D1) destiné à mettre en file d'attente le premier paquet agrégé (AP' ; AP1') fourni par le premier modélisateur de trafic (TS1), dans lequel ledit premier étage de mise en file d'attente de destination (D1) traite le premier paquet agrégé (AP' ; AP1') selon un premier critère de destination puis fournit le premier paquet agrégé au premier émetteur optique (TX1).

9. Noeud optique (ON1) selon la revendication 8, dans lequel la première couche d'insertion de paquets optiques (OL1) comprend en outre un étage de mise en file d'attente selon des critères (CSS) destiné à mettre en file d'attente le premier paquet agrégé (AP ; AP1) selon un premier critère de mise en file d'attente sélectionné parmi le groupe qui consiste en un critère de qualité de service, un critère de catégorie de service, et un critère de premier entré/premier sorti.

10. Noeud optique (ON1) selon l'une quelconque des revendications 8 à 9, dans lequel le premier critère de destination est déterminé :
- afin de minimiser la durée du traitement du premier paquet de données par la première couche d'insertion de paquets optiques (OL1), et
- selon une destination cible du premier paquet agrégé (AP ; AP1).

11. Noeud optique (ON1) selon l'une quelconque des revendications 8 à 10, qui comprend en outre :
- un second émetteur optique (TX2) destiné à transmettre des paquets optiques sur le réseau optique (OR),
- une seconde couche d'insertion de paquets optiques (OL2) qui coopère avec ledit second émetteur optique (TX2),
dans lequel ladite seconde couche d'insertion de paquets optiques (OL2) comprend :
- un second étage d'agrégation (AG2) destiné à agréger un second paquet de données (P3) à transmettre sur le réseau optique (NW) avec d'autres paquets de données (P4 ; P5) à transmettre sur ledit réseau optique (OR), et à délivrer un second paquet agrégé (AG2) qui comprend le second paquet de données (P2),
- un second modélisateur de trafic (TS2) destiné à traiter le second paquet agrégé (AG2) fourni par le second étage d'agrégation (AG2), dans lequel ledit second modélisateur de trafic (TS2) limite le nombre de paquets traités par un second étage de mise en file d'attente de destination (D2) sous un autre seuil, dans lequel ledit autre seuil est déterminé à partir de la capacité de transmission optique du nœud optique (ON1),
- un second étage de mise en file d'attente de destination (D2) destiné à mettre en file d'attente le second paquet agrégé (AP2') fourni par le second modélisateur de trafic (TS2), dans lequel ledit second étage de mise en file d'attente de destination (D2) traite le second paquet agrégé (AP2') selon un second critère de destination puis fournit le second paquet agrégé au second émetteur optique (TX2).

12. Noeud optique (ON1) selon la revendication 11, dans lequel le premier émetteur optique (TX1) est adapté pour transmettre le premier paquet agrégé (AP1') avant la transmission du second paquet agrégé (AP2') par le second émetteur optique (TX2).
